# EUROPÄISCHE PATENTSCHRIFT

(11) **EP 1 731 021 B1**
(45) Veröffentlichungstag und Bekanntmachung des Hinweises auf die Patenterteilung: **03.06.2009**
(21) Anmeldenummer: 06006063.9
(22) Anmeldetag: 24.03.2006
(51) Int. Cl.: A01F 12/30

(54) **Selbstfahrende Landmaschine**
Self-propelled agricultural machine
Véhicule agricole autopropulsé

(30) Priorität: 06.06.2005 DE 102005026182
(43) Veröffentlichungstag der Anmeldung: 13.12.2006
(73) Patentinhaber: CLAAS Selbstfahrende Erntemaschinen GmbH, 33428 Harsewinkel (DE)
(72) Erfinder: Spechtel, Josef, 33775 Versmold (DE); Scholz, Egbert, 33729 Bielefeld (DE); Benten, Dieter, 48336 Sassenberg (DE); Nöring, Jens, 48477 Hörstel (DE)

(56) Entgegenhaltungen:
- EP-A- 0 501 096
- WO-A-02/03775
- DE-A1- 2 018 676
- DE-A1- 2 419 940

## Beschreibung

Die vorliegende Erfindung bezieht sich allgemein auf das Gebiet der Landwirtschaft und die Verarbeitung von Ernteerzeugnissen. Hierzu werden selbstfahrende Landmaschinen, welche zur Aufnahme und zur Verarbeitung des Erntegutes dienen, eingesetzt. Bei den selbstfahrenden Landmaschinen handelt es sich in der Regel um Dreschmaschinen, insbesondere Mähdrescher, die mit Einrichtungen zur Verarbeitung des Erntegutes ausgestattet sind. Zur Verarbeitung des Erntegutes, welches aus einem Gemisch von Kornmaterial und Nichtkornanteilen besteht, werden beispielsweise Einrichtungen zum Trennen der unterschiedlichen Bestandteile des Erntegutes eingesetzt. Eine solche Einrichtung ist beispielweise der sogenannte Schüttlerhorden. Der Antrieb der Schüttlerhorden erfolgt über Kurbelwellen, auf denen die Schüttlerhorden gelagert sind. Die mehrfach gekröpfte Kurbelwelle dient der Aufnahme von mehreren, nebeneinander angeordneten Schüttlerhorden, und ist mindestens an zwei Stellen mit Lagern, beispielsweise in den Seitenwänden des Mähdreschergehäuses oder des Maschinengestells des Mähdreschers, drehbar befestigt. Die Kurbelwelle, nachstehend als Schüttlerwelle bezeichnet, weist in Wellenlängsrichtung abwechselnd horizontale und schräg verlaufende Wellenabschnitte auf, wobei die waagerechten Wellenabschnitte jeweils als Drehlagerung einer Schüttlerhorde dienen und deren Halterung durchfassen.

Gekröpfte Kurbelwellen, die als Schüttlerwellen zum Antrieb von Schüttlerhorden in Mähdreschern eingesetzt werden, sind aus dem Stand der Technik bekannt. Eine derartig aufgebaute Schüttlerwelle für die Durchführung von Schüttelbewegungen bei Schüttlerhorden ist der EP 0 069 161 B1 zu entnehmen. Nachteil dieser Anordnung ist, dass auf der Längsmittelebene des Mähdreschers sich ein weiteres Lager befindet, welches zur Abstützung der Schüttlerwelle dient. Dieses mittlere Stützlager ist notwendig, um die von der Schüttlerwelle auftretenden Schwingungen, die durch die Massenungleichheit in der Kurbelwelle entstehen und eine große Unwucht erzeugen, aufzunehmen. Des weiteren sind die Kröpfungswinkel zwischen den Kröpfungen in einer Größenordnung, die sich nachteilig auf die Scherfestigkeit der Schüttlerwelle auswirken.

Ebenfalls mit den vorgenannten Nachteilen ausgestattet ist die in der DE 39 07 836 C2 für den Antrieb von Schüttlerhorden offenbarte Kurbelwelle. Auch hier sind die Kröpfungen der Kurbelwelle jeweils um 180 Grad gegeneinander versetzt, so dass sich die jeweils benachbarten Schüttlerhorden im Gegentakt zueinander bewegen, wodurch eine Unwucht erzeugt wird.

Eine mehrfach gekröpfte Kurbelwelle wird in der DE 2 018 676 beschrieben, wobei die Kröpfungen der Kurbelwelle auf unterschiedlichen Kreisbahnen angeordnet sind und nur vier Abkröpfungen aufweisen. Zwei Abkröpfungen stehen sich jeweils um 180 Grad verstzt gegenüber. Diese Ausführungsform ist für die sechs oder acht parallel zueinander verlaufenden Schüttlerhorden moderner Mähdrescher, welche die Aufgabe haben, das noch in der Stroh - Spreu - Matte befindliche Erntegut einerseits auszuschütteln und andererseits die auf den Schüttlerhorden befindlichen Teile der Strohmatte aufzulockern und mit gleicher Bewegungsgeschwindigkeit zu transportieren, nicht geeignet.

Der Erfindung liegt daher die Aufgabe zugrunde, eine gekröpfte Schüttlerwelle der eingangs genannten Art zu schaffen, welche die genannten Nachteile der bekannten Anordnung aus dem Stand der Technik vermeidet und eine technische Lösung anzugeben, die es ermöglicht, eine mit einfacher Funktionsgeometrie ausgestattete gekröpfte Schüttlerwelle herzustellen, welche eine Bauform aufweist, die für eine Vielzahl von Schüttlerhorden einsetzbar ist.

Erfindungsgemäß wird dieses Problem durch die kennzeichnenden Merkmale des Patentanspruches 1 gelöst. Vorteilhafte Ausgestaltungen und Weiterbildungen der Erfindung und ergeben sich aus den nachstehenden Unteransprüchen und den nachfolgenden Beschreibungen.

Um eine mit den Merkmalen der vorliegenden Erfindung ausgestattete gekröpfte Schüttlerwelle für Schüttlerhorden von Mähdreschern zu schaffen, wird erfindungsgemäß vorgeschlagen, eine gekröpfte Schüttlerwelle herzustellen, die einerseits optimale statische und dynamische Massenausgleichswerte besitzt, um bei hohen Drehgeschwindigkeiten keine Unwucht zu erzeugen und somit schädliche Schwingungen zu vermeiden und andererseits bei langen Schüttlerwellen auf das mittlere Stützlager verzichten zu können, ohne den Querschnitt der Schüttlerwelle zu vergrößern.

Statische Unwucht entsteht, wenn die Drehachse der Schüttlerwelle nicht durch die Schwerpunktachse verläuft. Charakteristisch für eine statische Unwucht ist, dass die Ebene, in der die Unwucht liegt, mit der Radialebene der Schwerpunktachse übereinstimmt. Die statische Unwucht ist ein Sonderfall der dynamischen Unwucht. Die dynamische Unwucht entsteht, wenn die Rotationsachse der Schüttlerwelle nicht mit der Hauptträgheitsachse der Schüttlerwelle übereinstimmt. Die Rotationsachse ist dann in die Schwerpunktachse gekippt. Die dynamische Unwucht tritt erst im Betrieb auf. Sie äußert sich in einem Biegemoment, dem sogenannten Unwuchtmoment auf der Rotationsachse und wirkt sich auch auf die Wankachse der Schüttlerhorden aus. Die Wankachse verläuft in Längsrichtung des Mähdreschers und parallel zu den Schüttlerhorden. Weitere Erläuterungen dazu können den Figurenbeschreibungen 1 bis 3 entnommen werden.

Ein weiteres Kriterium ist die Festigkeit der Schüttlerwelle, die sich bei einteilig geschmiedeten , gegossenen oder gebogenen Kurbelwellen aus dem Material und dem Querschnitt ergibt. Um eine Schüttlerwelle festigkeitsmässig optimal auszulegen, darf sie weder zu schwach noch zu stark dimensioniert sein, damit im kritischen Drehzahlbebreich infolge von Resonanzschwingungen kein Bruch an der Schüttlerwelle auftritt. Aus diesem Grund ist es nicht ohne weiteres möglich, relativ lange Schüttlerwellen entsprechend stärker zu dimensionieren.

Die sehr stark auf Resonanzschwingungen und Stöße beanspruchte, gekröpfte Schüttlerwelle soll neben der Funktion des Schüttelns der Schüttlerhorden bei einem erhöhten Durchsatz von Erntegut ein ruhiges Laufverhalten aufweisen.

Es kommt eine massenausgleichsgerechte Kurbelwelle zum Einsatz, welche die Lagerkräfte in den Auflagern zu jedem Zeitpunkt gegen Null werden lässt, so dass die Summe der Lagerkräfte ein Minimum annimmt. Dazu hat die Schüttlerwelle kinetische Bedingungen zu erfüllen, die sich aus der statischen und dynamischen Unwucht ergeben und welche erfindungsgemäß durch die Variation des Kröpfungswinkels zwischen den Kröpfungen erreicht werden, wobei alle Kröpfungen den gleichen Kurbelradius aufweisen.

Eine vorteilhafte Ausgestaltung der Erfindung ergibt sich dann, wenn der Kröpfungswinkel zwischen zwei benachbarten Kröpfungen mindestens 90 Grad beträgt, damit ein Schütteleffekt des Erntegutes auf den Schüttlerhorden entstehen kann. Die optimale Verkröpfungsfolge, die sich für die in Wellenlängsrichtung horizontal angeordneten Wellenabschnitte ergibt, weist erfindungsgemäß einen Kröpfungswinkel zwischen 110 Grad und 160 Grad auf, wobei vorzugsweise sich ein optimaler Wert im Wechsel, d.h. in der Kröpfungswinkelfolge von ca.120 Grad und ca.140 Grad, bei einer Schüttlerwelle mit einer Anzahl von sechs Kröpfungen ergibt. D.h., die nebeneinander liegenden Kröpfungen stehen sich nicht mehr, wie im Stand der Technik angegeben, um jeweils 180 Grad gegenüber, sondern die Massen der horizontalen Wellenabschnitte sind auf dem Kreisumfang, durch verschiedene Kröpfungswinkel, massenausgleichsgerecht angeordnet. Durch die Variation der Kröpfungswinkel der Schüttlerwelle wird erreicht, dass die durch die Schüttlerwelle und den Schüttlerhorden bedingten Unwuchtkräfte sowohl um die Rotationsachse der Schüttlerwelle, als auch um die Wankachse des Mähdreschers reduziert werden, wodurch sich sowohl die Schwingungen des Mähdreschers, als auch die Belastungen der Lagerungen der Schüttlerwelle im Maschinengehäuse stark verringern.
Die erfindungsgemäße Variation der Kröpfungswinkel ist nicht auf die in den Figuren dargestellte Schüttlerwelle mit sechs Kröpfungen begrenzt, sondern auf Schüttlerwellen mit beliebiger Anzahl von Kröpfungen bzw. Schüttlerhorden anwendbar.
Die Reihenfolge der Kröpfungswinkel für eine Schüttlerwelle mit acht Kröpfungen, angeordnet auf gleichem Kreisdurchmesser, entspricht in etwa der Verkröpfungsfolge einer Schüttlerwelle mit sechs Kröpfungen. D.h., der Kröpfungswinkel zwischen zwei benachbarten Kröpfungen beträgt mindestens 90 Grad und ist kleiner 180 Grad, vorzugsweise 150 Grad. Durch die erfindungsgemäße massenausgleichsgerechte Verteilung der Kröpfungen auf einem Kreisdurchmesser unter Berücksichtigung der Exzentrizität, d.h. der Minimierung des Rundlauffehlers der Symmetrieachsen der Kröpfungen zur Symmetrieachse bzw. der Rotationsachse der Wellenenden (Lagerstellen) der Schüttlerwelle, entfällt das bekannte sehr zeit-und arbeitsintensive Auswuchtverfahren.

Ein Ausführungsbeispiel der Erfindung ist in den Zeichnungen schematisch dargestellt und wird nachfolgend näher beschrieben. Es zeigen:
- Figur 1: eine selbstfahrende Landmaschine mit angeordneten Schüttlerhorden,
- Figur 2: eine schematische Vorderansicht einer mehrere nebeneinander angeordnete Schüttlerhorden tragenden Schüttlerwelle mit zwei endseitigen Wellenlagerungen,
- Figur 3: skizzenhaft eine gekröpfte Schüttlerwelle in Seitenansicht

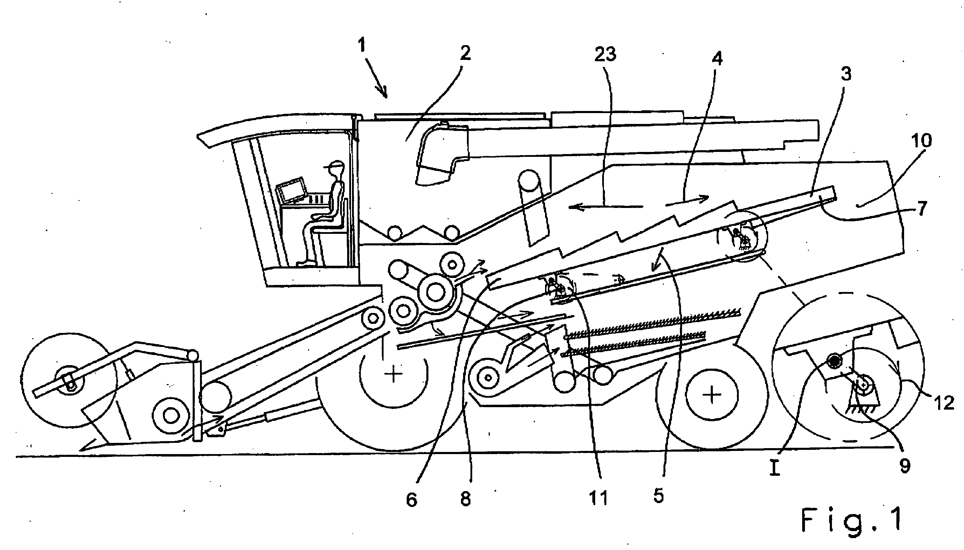

Gemäß der Fig.1 bezieht sich die Erfindung auf eine selbstfahrende Landmaschine 1, insbesondere Mähdrescher 2, dem im rückwärtigen Bereich Schüttlerhorden 3 zugeordnet sind, welche die noch in dem Stroh- Spreu- Gemisch 4 befindlichen Körner 5 abtrennen. Die Schüttlerhorden 3 sind im vorderen Bereich 6 und im hinteren Bereich 7 auf Schüttlerwellen 8, 9 bzw. im Maschinengehäuse 10 des Mähdreschers 2 drehbar gelagert. Zumindest eine der Schüttlerwellen 8,9 wird beispielsweise über eine Riemenscheibe 11 im Uhrzeigersinn drehbar angetrieben. Die gelenkig mit den Schüttlerwellen 8,9 verbundenen Schüttlerhorden 3 bewegen sich jeweils auf einer Kreisbahn 12 abwechselnd auf und ab sowie vor und zurück, wodurch das Stroh- Spreu- Gemisch 4 über die Schüttlerhorden 3 in den hinteren Bereich des Mähdreschers 2 befördert wird.

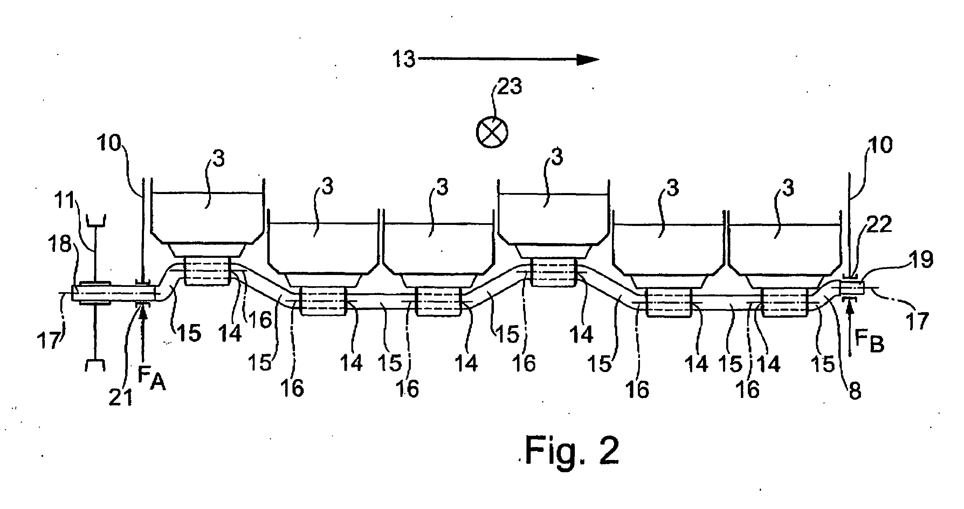

In der Fig. 2 ist eine erfindungsgemäße Schüttlerwelle 8, anhand der Welle 8, mit sechs, darauf angeordneten Schüttlerhorden 3 gelagert in einem Mähdreschergehäuse 10, schematisch in Vorderansicht aufgezeigt.
Die Schüttlerwelle 8 ist einteilig und in sich gekröpft ausgebildet und weist in Wellenlängsrichtung 13 abwechselnd horizontale und schrägverlaufende Wellenabschnitte 14, 15 auf. Mit ihren waagerechten Wellenabschnitten 14, deren Symmetrieachse 16 parallel zu der Rotationsachse 17 der Wellenenden 18, 19 verläuft, durchfasst die Schüttlerwelle 8 jeweils eine Drehlagerung 20 einer Schüttlerhorde 3. Die Schüttlerwelle 8 ist mit ihren beiden koaxial und horizontal verlaufenden Wellenenden 18, 19 in äußeren Lagern 21, 22, vorzugsweise Radiallagern, im Mähdrescher- Maschinengestell 10 drehbar gelagert. An einem Wellenende 18 greift beispielsweise eine Riemenscheibe 11 zur Drehung der Schüftlerwelle 8 an.
Durch die Rotation der Schüttlerwelle 8 um die Rotationsachse 17, wobei die horizontalen Wellenenden 14 gleichweit von der Rotationsachse entfernt angeordnet sind und den daran befestigten Schüttlerhorden 3, entstehen normalerweise Unwuchtkräfte, aus denen Auflagerkräfte FA,FB resultieren, die einerseits die äußeren Lagerungen 21, 22 der Schüttlerwelle 8 in dem Maschinengehäuse 10 stark belasten und andererseits zum Wanken des Mähdreschers 2 um eine in Längsrichtung des Mähdreschers 2 verlaufende Wankachse 23 (Fig.2) führen, wobei durch die Variation der Kröpfungswinkel 24-28 die Auflagerkräfte F_{A}, F_{B} in jeder Lage der Schüttlerwelle 8 annähernd gleich Null werden.

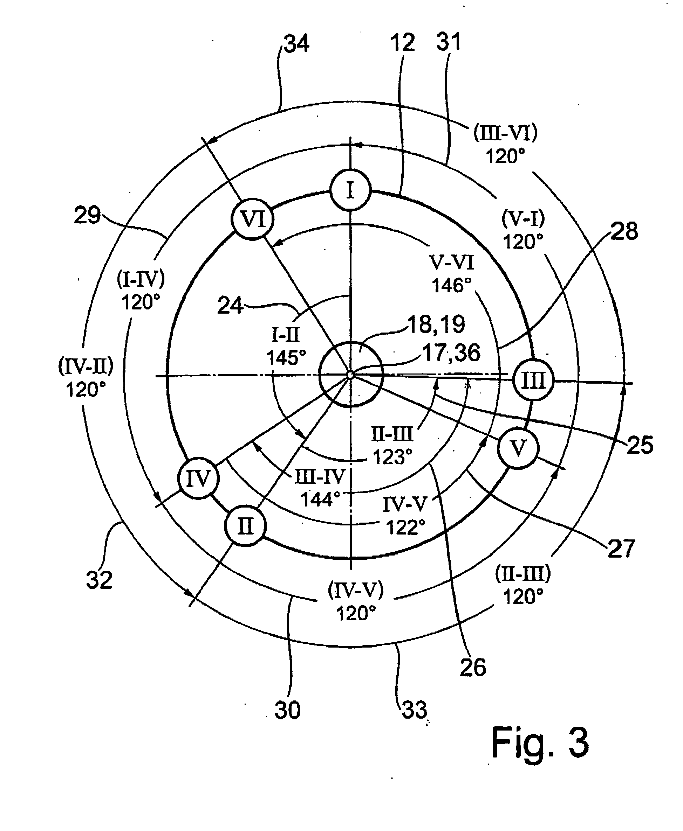

Aus der Fig.3 ist ersichtlich, dass die Schüttlerwelle 8, 9 aus mehreren Kröpfungen I-VI besteht, wobei die Kröpfungen I -VI jeweils gleiche Kurbelradien, bzw. die gleiche Kreisbahn 12 aufweisen und die Schüttlerhorden 3 jeweils mittig an der entsprechenden Kröpfung I-VI ( siehe Fig. 2, 20 ) gelagert sind. Die Kröpfungswinkel 24 - 28 zwischen den Kröpfungen I- VI variieren erfindungsgemäß und sind dadurch unterschiedlich groß. D.h. die nebeneinander liegenden Kröpfungen I-VI stehen sich nicht mehr, wie im Stand der Technik angegeben, um 180 Grad gegenüber, sondern die horizontalen Wellenabschnitte 14 der Kröpfungen I-VI sind auf einem Kreisumfang 12 im Winkelabstand 29-34 von ca. 120 Grad massenausgleichsgerecht verteilt. Das bedeutet, der Winkelabstand 29 zwischen den Kröpfungen I und IV, der Winkelabstand 30 zwischen den Kröpfungen IV-V, der Winkelabstand 31 zwischen den Kröpfungen V und I, der Winkelabstand 32 der Kröpfungen VI und II, der Winkelabstand 33 zwischen den Kröpfungen II und III und der Winklabstand 34 zwischen den Kröpfungen III und IV beträgt jeweils etwa 120 Grad.
Dadurch ergibt sich in der erfindungsgemäßen Kröpfungswinkelfolge zwischen zwei benachbarten Kröpfungen ein Kröpfungswinkel der größer 90 Grad und kleiner 180 Grad ist. Die genaue Kröpfungswinkelfolge 24-28 kann der Fig.3 entnommen werden und beträgt im Wechsel der Kröpfungen ca. 120 Grad oder ca. 140 Grad. Aus der erfindungsgemäßen Anordnung der Kröpfungswinkelfolge 24- 28 zwischen den Kröpfungen ergibt sich, dass die Schüttlerwelle 8,9 statisch und dynamisch ausgewuchtet ist. D.h. die Anzahl der Drehpunkte der Symmetrieachsen 16 (siehe Fig.2), die sich aus der Anzahl der Kröpfungen I- VI ergeben und die sich auf einer Kreisbahn 12 befinden, bilden eine Schwerpunktsachse 36. Diese Schwerpunktsachse 36 fällt aufgrund der erfindungsgemäßen Kröpfungswinkelfolge 35 mit der Rotationsachse 17 zusammen. Das in Fig. 3 dargestellte Prinzip einer erfindungsgemäßen Ausführungsform einer Schüttlerwelle 8, 9 ist nicht auf eine bestimmte Kröpfungszahl beschränkt, sondern für eine beliebige Anzahl von Kröpfungen, gerader oder ungerader Anzahl, anwendbar.

### Bezugszeichenliste:

- 1: selbstfahrende Landmaschine
- 2: Mähdrescher
- 3: Schüttlerhorden
- 4: Stroh-Spreu-Gemisch
- 5: Körner
- 6: vorderer Bereich
- 7: hinterer Bereich
- 8: Schüttlerwelle
- 9: Schüttlerwelle
- 10: Mähdreschergehäuse
- 11: Riemenscheibe
- 12: Kreisbahn
- 13: Wellenlängsrichtung
- 14: Wellenabschnitt horizontal
- 15: Wellenabschnitt schräg
- 16: Symmetrieachse (von 14)
- 17: Symmetrieachse (von 18,19)
- 18: Wellenende
- 19: Wellenende
- 20: Drehlagerung
- 21: Lager (FA)
- 22: Lager (FB)
- 23: Wankachse
- 24: Kröpfungswinkel I-II
- 25: Kröpfungswinkel II-III
- 26: Kröpfungswinkel III-IV
- 27: Kröpfungswinkel IV-V
- 28: Kröpfungswinkel V-VI
- 29: Winkelabstand (I-IV)
- 30: Winkelabstand (IV-V)

- 31: Winkelabstand (V-I)
- 32: Winkelabstand (VI- II)
- 33: Winkelabstand (II-III)
- 34: Winkelabstand (III-VI)

- I: Kröpfung
- II: Kröpfung
- III: Kröpfung
- IV: Kröpfung
- V: Kröpfung
- VI: Kröpfung
- 35: Kröpfungswinkeifolge
- 36: Schwerpunktachse
- F_{A}: Auflagerkraft
- F_{B}: Auflagerkraft

## Patentansprüche

1. Selbstfahrende Landmaschine (1), insbesondere Mähdrescher (2), mit mehreren nebeneinander angeordneten Schüttlerhorden (3) und einer gekröpften Kurbelwelle (8) zum Antrieb der Schüttlerhorden (3), welche in Wellenlängsrichtung (13) abwechselnd horizontal und schräg verlaufende Wellenabschnitte (14,15) aufweist, mit ihren waagrechten Wellenabschnitten (14) jeweils eine Drehlagerung (20) einer Schüttlerhorde (3) durchfasst, mit ihren beiden Wellenenden (18,19) im Mähdreschergehäuse (10) drehbar gelagert ist,
**dadurch gekennzeichnet,**
**dass** die Kurbelwelle (8) durch die Variation der Kröpfungswinkelfolge (24-28) zwischen zwei benachbarten Kröpfungen (I,II;III,IV,V,VI) statisch und dynamisch ausgewuchtet ist, wobei der Kröpfungswinkel (24-28) größer 90° und kleiner 180° ist.

2. Selbstfahrende Landmaschine (1) mit einer gekröpften Kurbelwelle (8) nach wenigstens einem der vorhergehenden Ansprüche,
**dadurch gekennzeichnet,**
**dass** die Kurbelwelle (8) in äußeren Lagern (21, 22) im Mähdreschergehäuse (10) gelagert ist.

3. Selbstfahrende Landmaschine (1) mit einer gekröpften Kurbelwelle (8) nach wenigstens einem der vorhergehenden Ansprüche,
**dadurch gekennzeichnet,**
**dass** durch die Rotation der Kubelwelle (8) Unwuchtkräfte erzeugt werden, aus denen Auflagerkräfte (FA, FB) in den äußeren Lagern (21, 22) resultieren, wobei durch die Variation der Kröpfungswinkel (24-28) die Auflagerkräfte (FA, FB) in jeder Lage der Schüttferwelle (8) annähernd gleich Null sind.

4. Selbstfahrende Landmaschine (1) mit einer gekröpften Kurbelwelle (8) nach wenigstens einem der vorhergehenden Ansprüche,
**dadurch gekennzeichnet,**
**dass** der Ausgleich der Unwuchtkräfte der Kurbelwelle (8, 9) sowohl um die Rotationsachse (17) als auch um die Wankachse (23) der Erntemaschine erfolgt.

5. Selbstfahrende Landmaschine (1) mit einer gekröpften Kurbelwelle (8) nach Anspruch 1 bis 3,
**dadurch gekennzeichnet,**
**dass** die Verteilung der Kröpfungen (I) bis (VI) auf dem Kreisumfang (12) im Winkelabstand (29-34) im Wechsel von ca. 120 Grad und ca. 140 Grad erfolgt.

6. Selbstfahrende Landmaschine (1) mit einer gekröpften Kurbelwelle (8) nach wenigstens einem der vorhergehenden Ansprüche,
**dadurch gekennzeichnet,**
**dass** ein horizontaler Wellenabschnitt (14) zusammen mit den angrenzenden schrägen Wellenabschnitten (15) eine Kröpfung (I, II, III, IV, V, VI) bildet.

7. Selbstfahrende Landmaschine (1) mit einer gekröpften Kurbelwelle (8) nach Anspruch 1,
**dadurch gekennzeichnet,**
**dass** die Kurbelwelle (8) um eine Rotationsachse (18-19) rotiert, wobei die Kröpfungen (I, II, III, IV, V, VI) einen konstanten Kurbelradius aufweisen.

## Claims

1. A self-propelled agricultural machine (1), in particular a combine harvester (2), having a plurality of mutually juxtaposed straw walkers (3) and an offset crankshaft (8) for driving the straw walkers (3), which in the longitudinal direction (13) of the shaft has alternately horizontally and inclinedly extending shaft portions (14, 15), which with each of its horizontal shaft portions (14) passes through a respective rotary bearing (20) of a straw walker (3) and which is mounted rotatably with its two shaft ends (18, 19) in the combine harvester housing (10),
**characterised in that**
the crankshaft (8) is statically and dynamically balanced by the variation in the offset angle sequence (24-28) between two adjacent offsets (I, II, III, IV, V, VI), wherein the offset angle (24-28) is greater than 90° and less than 180°.

2. A self-propelled agricultural machine (1) having an offset crankshaft (8) according to claim 1 **characterised in that** the crankshaft (8) is mounted in external bearings (21, 22) in the combine harvester housing (10).

3. A self-propelled agricultural machine (1) having an offset crankshaft (8) according to at least one of the preceding claims **characterised in that** due to the rotation of the crankshaft (8) unbalance forces are generated which result in support forces (FA, FB) in the external bearings (21, 22), wherein the support forces (FA, FB) are approximately equal to zero in any position of the walker shaft (8) due to the variation in the offset angles (24-28).

4. A self-propelled agricultural machine (1) having an offset crankshaft (8) according to at least one of the preceding claims **characterised in that** compensation for the unbalance forces of the crankshaft (8, 9) is effected both about the axis of rotation (17) and also about the roll axis (23) of the harvester.

5. A self-propelled agricultural machine (1) having an offset crankshaft (8) according to claims 1 to 3 **characterised in that** the distribution of the offsets (I) to (IV) on the circular periphery (12) is effected at an angular spacing (29-34) alternately of about 120 degrees and about 140 degrees.

6. A self-propelled agricultural machine (1) having an offset crankshaft (8) according to at least one of the preceding claims **characterised in that** a horizontal shaft portion (14) together with the adjoining inclined shaft portions (15) forms an offset (I, II, II, IV, V, VI).

7. A self-propelled agricultural machine (1) having an offset crankshaft (8) according to claim 1 **characterised in that** the crankshaft (8) rotates about an axis of rotation (18-19), wherein the offsets (I, II, III, IV, V, VI) have a constant crank radius.

## Revendications

1. Machine agricole automotrice (1), en particulier moissonneuse-batteuse (2), comportant plusieurs claies de secoueur (3) juxtaposées et un vilebrequin coudé (8) pour l'entraînement des claies de secoueur (3), lequel présente des sections d'arbre (14, 15) s'étendant alternativement horizontalement et obliquement dans la direction longitudinale d'arbre (13), passe par chacune de ses sections d'arbre horizontales (14) à travers un palier de pivotement (20) d'une claie de secoueur (3) et est monté à rotation dans le carter de moissonneuse-batteuse (10) par ses deux extrémités d'arbre (18, 19), **caractérisée en ce que** le vilebrequin (8) est équilibré statiquement et dynamiquement par la variation de la séquence d'angles de coudage (24-28) entre deux coudes adjacents (I, II, III, IV, V, VI), l'angle de coudage (24-28) étant supérieur à 90° et inférieur à 180°.

2. Machine agricole automotrice (1) avec un vilebrequin coudé (8) selon au moins l'une des revendications précédentes, **caractérisée en ce que** le vilebrequin (8) est monté dans des paliers extérieurs (21, 22) dans le carter de moissonneuse-batteuse (10).

3. Machine agricole automotrice (1) avec un vilebrequin coudé (8) selon au moins l'une des revendications précédentes, **caractérisée en ce que** la rotation du vilebrequin (8) produit des forces de déséquilibre dont il résulte des forces d'appui (F_{A}, F_{B}) dans les paliers extérieurs (21, 22), les forces d'appui (F_{A}, F_{B}) étant à peu près annulées par la variation des angles de coudage (24-28) dans toute position du vilebrequin (8).

4. Machine agricole automotrice (1) avec un vilebrequin coudé (8) selon au moins l'une des revendications précédentes, **caractérisée en ce que** la compensation des forces de déséquilibre du vilebrequin (8, 9) s'effectue aussi bien autour de l'axe de rotation (17) qu'autour de l'axe de roulis (23) de la moissonneuse.

5. Machine agricole automotrice (1) avec un vilebrequin coudé (8) selon les revendications 1 à 3, **caractérisée en ce que** les coudes (I) à (VI) sont répartis sur la circonférence (12) à une distance angulaire (29-34) alternativement d'environ 120 degrés et d'environ 140 degrés.

6. Machine agricole automotrice (1) selon au moins l'une des revendications précédentes, **caractérisée en ce qu'**une section d'arbre horizontale (14) forme avec les sections d'arbre obliques (15) adjacentes un coude (I, II, III, IV, V, VI).

7. Machine agricole automotrice (1) avec un vilebrequin coudé (8) selon la revendication 1, **caractérisée en ce que** le vilebrequin (8) tourne autour d'un axe de rotation (18-19), les coudes (I, II, III, IV, V, VI) présentant un rayon de manivelle constant.
